Europäisches Patentamt

(19) European Patent Office

Office européen des brevets

(11) Publication number: 0 163 353
A2

# (12) EUROPEAN PATENT APPLICATION

(21) Application number: 85200836.6

(22) Date of filing: 24.05.85

(51) Int. Cl.⁴: A 01 C 17/00
A 01 C 15/00

(30) Priority: 28.05.84 NL 8401700

(43) Date of publication of application:
04.12.85 Bulletin 85/49

(84) Designated Contracting States:
AT BE CH DE FR GB IT LI NL

(71) Applicant: C. van der Lely N.V.
Weverskade 10 P.O. Box 26
NL-3155 ZG Maasland(NL)

(72) Inventor: Van der Lely, Cornelis
7, Brüschenrain
Zug(CH)

(74) Representative: Mulder, Herman et al,
Octrooibureau Van der Lely N.V. Weverskade 10 P.O. Box 26
NL-3155 ZG Maasland(NL)

(54) A spreader.

(57) A spreader suitable for distributing fertilizer, for example, has fastening members (38, 39) by which the spreader is hitched to a tractor. The fastening members (38, 39) are displaceable, but are retained in their normal positions, in which the spreader is horizontal, by spring-loaded detents (61, 85). To tilt the spreader to achieve a narrower spreading width on one side, the speader is lowered to the ground to relieve the fastening members (38, 39) of the weight of the spreader, the appropriate detent (61, 85) is moved out of engagement with its fastening member (38, 39), and the spreader is raised. The released fastening member (38, 39) can pivot upwardly until it meets a stop (82, 88), with the result that the spreader is lifted in a tilted disposition. To return to the normal horizontal position, the spreader is lowered again, which causes a control member (81) to engage the lifting arm (40, 41) connected to the released fastening member (38, 39). The control member (81) causes the fastening member (38, 39) to be returned to its original position, where it is automatically engaged by the detent (61, 85).

FIG.1

EP 0 163 353 A2

-1-

2607.

A SPREADER

This invention relates to a spreader for spreading distributable material such as fertilizer, comprising a frame and a distribution member which is movable about an axis, the frame being provided with fastening members for coupling the spreader to a lifting device of a prime mover.

An object underlying the present invention is to provide a spreader of this kind whose position relative to the prime mover can be changed in a simple manner.

According to the present invention, at least one of the fastening members is adjustable with respect to the frame for disposition in any one of at least two different positions with respect to the frame in order to change the position of the spreader with respect to the prime mover, the frame being provided with a control member situated near the adjustable fastening member in a manner such that, upon displacement of the spreader with respect to the prime mover from one vertical level to another, the control member is operable to cause displacement of the adjustable fastening member from one of its positions to a different position.

With such a construction, the position of the spreader relative to the prime mover can be readily and simply changed by moving the spreader upwardly or downwardly with respect to the prime mover by means of the lifting device.

An advantageous embodiment is obtained when the fastening member is movable with respect to the frame from one vertical level to another and the control member is disposed above the fastening member, so that when the spreader is lowered with respect to the prime mover by means of the lifting device the control member can move the fastening member from a higher position into a lower position with respect to the frame. In this way the spreader can be tilted, for example in a transverse direction with respect to the tractor. Such tilting enables the distance over which the material is spread to one side of the spreader to be reduced, which may be advantageous for example for distributing the material on a peripheral strip of a surface to be covered.

The control member may comprise a control stop provided on an arm extending forwardly from the frame, which control stop co-operates, when the spreader is moved from one vertical level to another with respect to the prime mover by means of the lifting device, with the lifting arm connected to the adjustable fastening member for moving the latter from one position into the other position. The fastening member may be connected to the frame for pivotal movement.

Simple actuation of the spreader is possible when a detent is provided near the fastening member. The detent can co-operate with the fastening member in a manner such that it determines the normal working position of the fastening member with respect to the frame. By releasing the detent, the spreader can be readily displaced with respect to the prime mover.

The spreader may be provided on both sides with an adjustable fastening member, each member being movable with respect to the frame optionally into any one of at least two positions relative to the frame for changing the position of the spreader with respect to the tractor. In this way, transverse tilting of the spreader can be effected optionally to either side.

The present invention also provides a method of operating a spreader hitched to a lifting device of a prime mover, the method comprising the steps:

a) lowering the spreader into contact with the ground to relieve a fastening member of the spreader from at least part of the weight of the spreader;

b) displacing a detent from an operative position in engagement with the fastening member; and

c) raising the spreader, enabling the fastening member to move to a different vertical level with respect to the frame of the spreader to a positioned determined by a limit stop whereby the spreader assumes a transversely tilted position.

For a better understanding of the present invention and to show how it may be carried into effect, reference will now be made by way of example, to the accompanying drawings, in which:

Figure 1 is a side view of a spreader;

Figure 2 is a front view of the spreader taken on the line II-II in Figure 1;

Figure 3 shows, on an enlarged scale, a detail of the front view of Figure 2;

Figure 4 is a view taken in the direction of the arrow IV in Figure 3;

Figure 5 is a plan view taken on the line V-V in Figure 3;

Figure 6 is a front view of the spreader in an inclined position;

Figure 7 is a fragmentary side view taken in the direction of the arrow VII in Figure 6;

Figure 8 corresponds to Figure 7 but represents a different position of the spreader; and

Figure 9 corresponds to Figures 7 and 8 but represents a further different position of the spreader.

The Figures represent an agricultural machine in the form of a spreader particularly intended for distsributing granular and/or powdery material, for example fertilizer.

The spreader comprises a frame 1 provided with a hopper 2. Two distribution members 3 and 4 are mounted on the frame 1 below delivery spouts 5 and 6 of the hopper 2. The distribution members 3 and 4 are rotatable about upwardly extending axes 7 and 8, which are vertical when the spreader is horizontal. The rotary axes 7 and 8 coincide with the centre lines of the delivery spouts 5 and 6 of the hopper 2.

The spreader is substantially symmetrical to a vertical longitudinal plane 9 extending in the normal direction of operative travel of the spreader, this direction being indicated by an arrow 11. The distribution members 3 and 4 are situated one on each side of the plane 9. The rotary axes 7 and 8 of the distribution members lie in a transverse plane 10 which is at right angles to the longitudinal plane 9. The distribution members 3 and 4 are substantially identical to each other and are at the same level as each other when the spreader is horizontal.

The frame comprises two upwardly extending frame beams or posts 15 and 16, the top ends of which are interconnected by a horizontal beam 17, on which the hopper 2 is mounted. The posts 15 and 16 are provided with carrying arms 18 and 19, which are connected in a manner not shown in detail with the hopper spouts 5 and 6. The carrying arms 18 and 19 are provided with a connecting member 20 to which a carrier 21 is fastened. The carrier 21 supports the distribution members 3 and 4 in a manner which is not shown in detail. The carrier 21 has a gear box 22, in which a driving shaft 23 is journalled. The driving shaft 23 is connected by transmission means (not shown) in the gear box 22 and in the carrier 21 to the distribution members 3 and 4.

The frame furthermore comprises a supporting beam 24 secured to the lower end regions of the frame posts 15 and 16. The beam 24 has a supporting foot 25 near the rear of the spreader. The frame posts 15 and 16 are each provided at their lower ends with supporting feet 26 and 27 respectively. Dosing members 30 and 31 (not shown in detail) are provided between the delivery spouts 5 and 6 and the distribution members 3 and 4. Near the plane 9, the beam 17 is provided with two spaced lugs 35 having aligned holes 34. The lugs 35 constitute fastening means by which the spreader can be coupled to a top rod 36 of a lifting device 37. The posts 15 and 16 are provided with further fastening means comprising fastening members 38 and 39 respectively by which the spreader can be coupled to lower lifting arms 40 and 41 of the lifting device 47 of the tractor.

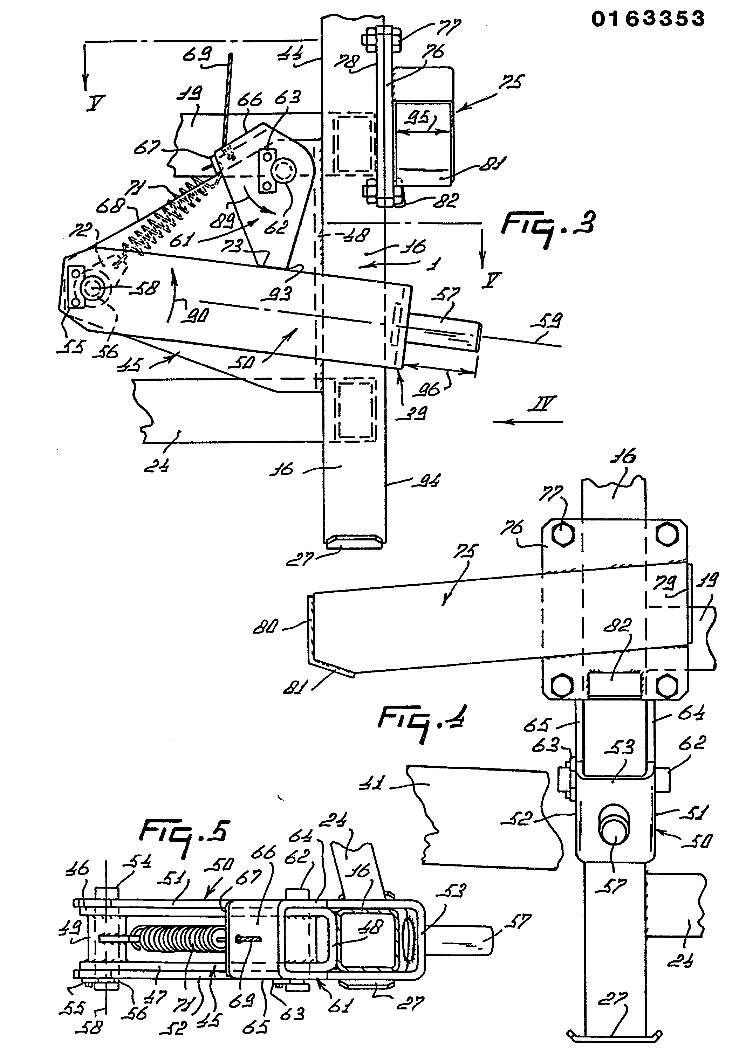

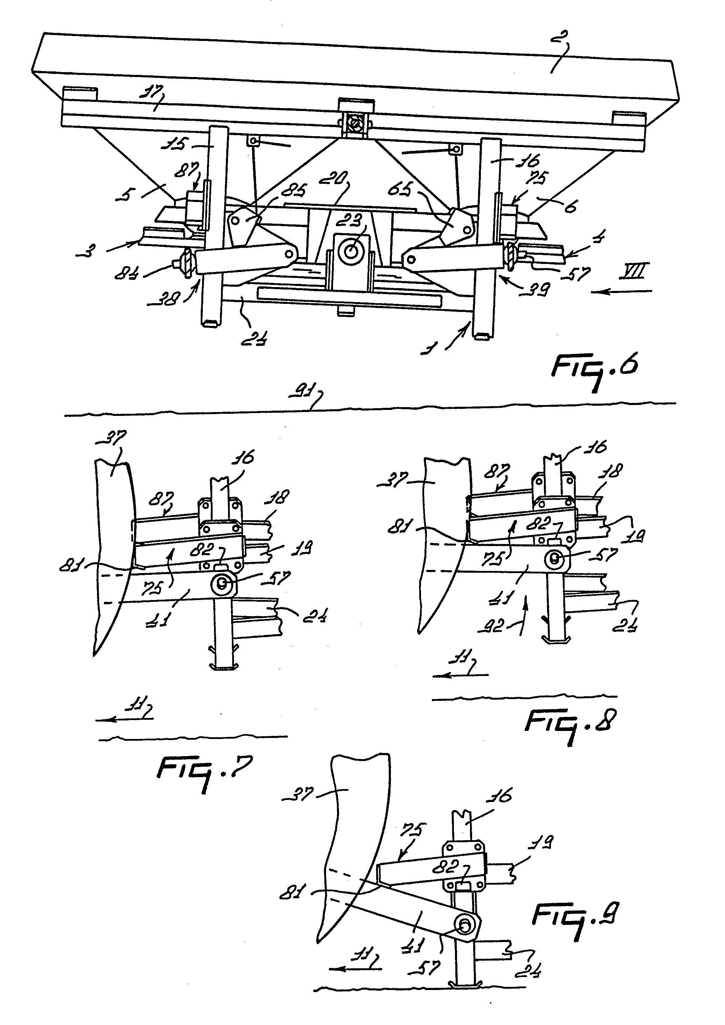

The fastening members 38 and 39 are identical to each other and are symmetrically disposed on the frame 1 with respect to the plane 9. Consequently, only the construction of the fastening member 39 will be described in detail. A supporting bracket 45 in the form of a bent plate is provided on the inboard side 44 of the post 16. The bracket 45 is generally triangular, as viewed from the front (Figure 3). Viewed on plan (Figure 5) the supporting bracket 45 is generally U-shaped, having limbs 46 and 47 which are interconnected by a web 48 welded to the post 16. A sleeve 49 is provided between the ends of the limbs 46 and 47. The supporting bracket 45 supports the fastening member 39 which comprises a carrying arm 50 in the form of a strip bent into the general form of a V. This carrying arm 50 has limbs 51 and 52 and a web 53. The limbs 51 and 52 extend on opposite sides of the post 16 and the bracket 45. The ends of the limbs 51 and 52 are pivotally connected to the frame by means of a pivotal shaft 54 journalled in the sleeve 49. The centre line 58 of the shaft 54 constitutes a pivotal axis for the fastening member 39. Displacement of the pivotal shaft 54 in the sleeve 49 is prevented by a locking plate 55 which fits in a groove 56 in the pivotal shaft 54. The limbs 51 and 52 extend along the front and rear sides of the frame post 16. The web 53 lies on the side of the frame post 16 opposite the pivotal shaft 54. The pivotal shaft 54 is situated on the side of the post 16 which faces towards the post 15. The web 53 is provided with a coupling pin 57, the centreline 59 of which intersects the centre line 58 of the pivotal shaft 54. The carrying arm 50 extends laterally from the shaft 54 away from the longitudinal plane 9.

A detent 61 is rotatably mounted on the supporting bracket 45 by means of a shaft 62 at a position near the fastening member 39. The detent 61 has the general shape of a U having two downwardly directed limbs 64 and 65 situated one on each side of the supporting bracket 45. The web 66 of the detent 61 is above the supporting bracket and has a stop 67 co-operating with the top of the supporting bracket 45. The pivotal shaft 62 is held against displacement by a retaining plate 63 which fits in a groove provided in the shaft 62. The plate 63 is fastened to the limb 65. The web 66 is provided with a actuating member for the detent 61 in the form of an flexible member which in this embodiment, is a cord 69. The cord 69 passes through an opening in a lug 70 on the beam 17. One end of a tensile spring 71 is connected to the strip 67, the other end of the spring 71 being connected to a lug 72 fastened to the sleeve 49. The lower portion 73 of the detent 61 constitutes a stop element which is adapted

to co-operate with the carrying arm 50.

Near the fastening member   39, the frame post 16 is provided with a control arm 75.  This control arm 75 comprises a rectangle-section beam welded to a fastening plate 76.  The plate 76 is fastened by bolts 77 to a plate 78 welded to the post 16.  The supporting arm 75 extends from the post 16 substantially horizontally to the front, with respect to the direction 11.  The ends of the beam 75 are closed by a plate 79 and a plate 80, the plate  80 having a bent-over part 81 extending over an inclined part of the control arm 75 to serve as a control member.  A limiting lug 82 is fast with the fastening plate 76 at its lower region. the limiting lug 82 and the control member 81 are at approximately the same height as each other when the spreader is horizontal.

The fastening means 38 comprises a coupling pin 84.  Near the fastening member of the fastening member 38 there is a detent 85, which is similar to the detent 61 and can be actuated by means of a flexible cord 86. Near the fastening member 38 there is a control arm with a control member 87 which is mounted on the post 15, this arm corresponding to the control arm 75 and the control member 81.  The post 15 is also provided with a limiting lug 88 corresponding with the limiting lug 82.

When the spreader is put into operation, it is coupled with the lifting device of a prime mover such as a tractor or a similar vehicle, for example the tractor 37 represented by only part of a wheel, the top rod 36 and the lifting arms 40 and 41.  The spreader is coupled by the fastening means 38 and 39 and 35 to the lifting device of the tractor.

The  spreader serves in particular to spread material during travel across the surface to be covered.  It is for this reason that the spreader is mobile and fastened to the tractor 37. The spreader embodying the invention is in particular suitable as a dispenser for spreading fertilizer or seeds on agricultural land. The material to be spread is carried in the hopper 2 and is fed from the hopper to the distribution members 3 and 4. When the spreader is coupled with the lifting device of the tractor, the drive shaft 23 is coupled by an auxiliary shaft with the power take-off shaft of the tractor. Thus drive is transmitted, in operation, from the power take-off shaft of the tractor to the driving shaft 23 and thence to the transmission members in the gear box 22 and the carrier 21 to rotate the distribution members 3 and 4. During operation, the spreader travels over the surface to be covered so that the distribution members spread the material over a strip of land. The rate of flow of material from the hopper to the distribution members can be controlled by adjusting the dosing members 30 and 31. In this embodiment the distribution members are driven at the same rotary speed as each other about their rotary axes 7,8. In this embodiment the distribution members are rotated in opposite senses so that their points of closest approach move in the direction 11. The shape of the distribution members 3 and 4 and the characteristics of the feed through the dosing members 30 and 31 are such that the two distribution members spread the material over substantially the same strip as each other during travel of the spreader, the strip thus receiving material from both of the distribution members. Owing to the symmetrical construction and the symmetrical disposition of the distribution members with respect to the plane 9, the material is spread symmetrically and quite uniformly on the strip.

For normal operation, the spreader is coupled to the tractor or other vehicle in a manner such that the material is spread over the same distance to both sides. The area density of the material decreases towards the edges of the strip concerned covered on each run. The parts of the strip covered with a reduced area density are overlapped during the next run by a corresponding distribution with reduced density so that, in total, the material is uniformly distributed across the strip to be covered. The spreader in the embodiment shown achieves a distribution of the material over the strip to be covered on each run which is such that, from the centre of this strip towards its edges, the area density of material decreases uniformly. Therefore, the strip spread during the next spreading run overlaps half of the previous strip in order to obtain a uniform distribution pattern. This wide overlap provides in most cases a very satisfactory solution of the problem of obtaining a very uniform distribution of the material over the surface to be covered.

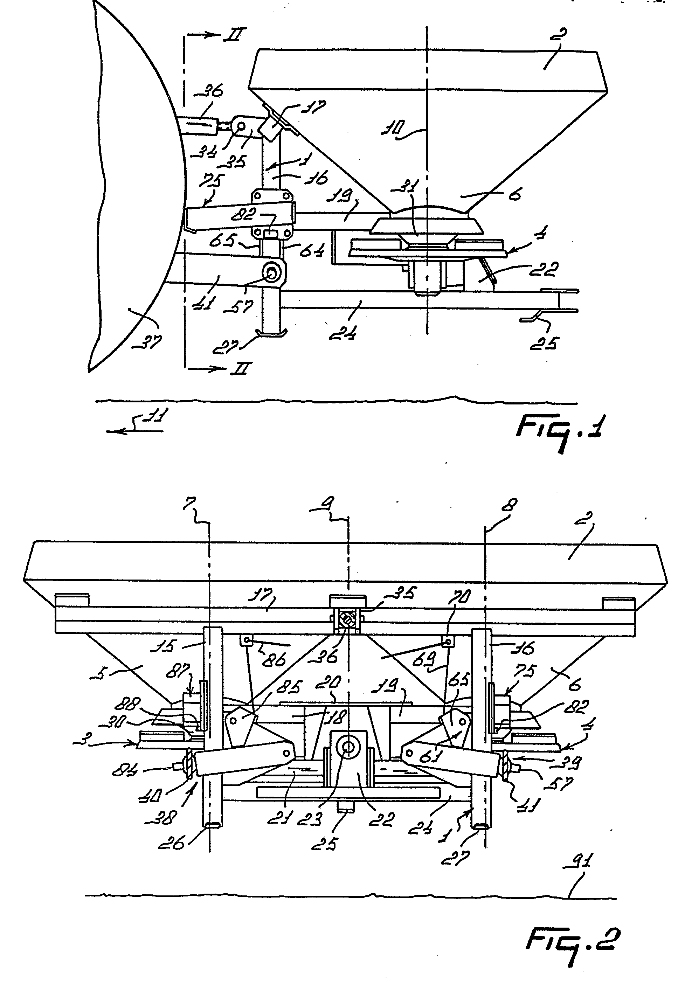

In the illustrated embodiment, as is shown in Figures 1 and 2, the distribution members are parallel to the surface to be covered during normal operation. However, for given spreading purposes, the distribution members can be tilted to some extent in the fore-and aft direction so that, for example, the distribution members are inclined upwardly or downwardly towards the rear. However, the spreader may remain horizontal or parallel to the surface to be covered in the lateral direction. In order to spread the material over the same distance to both sides from the plane 9, the rotary axes 7 and 8 lie in planes which are perpendicular to the surface to be covered and extend in the normal direction of travel 11.

The peripheral strips of a surface to be covered, for example the edges of a field, will receive too little material due to the decreasing area density of the material towards the edges during the normal operation of the device. In order to cover these peripheral strips up to the edges with uniform density of material, the distribution members can be inclined laterally of the normal direction 11 of travel. The result of this inclination is that the material will be spread laterally over a shorter distance from the plane 9 on the side towards which the distribution members are inclined downwards. However the total amount of material spread over this shorter distance remains the same as before. In this way the peripheral strip of a surface to be covered can be provided over its whole width with the same area density of material so that this peripheral strip receives an amount of material per unit surface equal to that on the remainder of the surface to be covered.

In this embodiment, the spreader is tilted as a whole for spreading a peripheral strip so that the two distribution members are inclined downwards at the desired angle to the surface to be covered. This angle will usually lie between 5 to 20°, preferably about 8°. The optimum angle depends on the height of the distribution members above the surface to be covered and on the desired spreading width. In this embodiment the shorter spreading width will be approximately equal to half the normal lateral distance of spread.

In order to tilt the spreader connected with the tractor with respect to the surface to be covered, it has to be set in a laterally inclined position with respect to the tractor standing parallel to the surface. This tilted setting is usually only required for covering a peripheral strip of the surface to be covered, after which the spreader is returned to the normal working position relative to the tractor so that at least the rotary axes 7 and 8 again lie in planes which are at right angles to the surface to be covered and extend in the direction 11. The tilted setting can be readily and simply obtained by upwardly displacing, with respect to the frame 1, the coupling pin 57 or 84 of the fastening member 39 or 38 on the side towards which the spreader is to be inclined downwardly. On the side where the coupling pin is moved upwards with respect to the frame, the spreader sinks down with respect to the tractor, assuming the lifting arms 40 and 41 remain at the same height above the ground. The tilted setting of the desired value is obtained by controlling the extent of the upward movement of the coupling pin from its normal working position with respect to the frame.

During normal operation the fastening members are arranged as is shown in Figures 2 and 3. In this position the carrying arms 50 of the fastening members 38 and 39 are prevented from rotating about the shafts 58 in the direction of the arrow 90 by the detents 61 and 85. The lower edges 73 of the detents 65 and 85, forming the stop lugs, are in contact with the tops of the carrying arms 50. The springs 71 bias these stop lugs 73 against the tops of the carrying arms 50, in the working position shown in Figure 3. The spring 73 tends to turn the detent 61 about the pivotal shaft 62 in the direction of the arrow 89. The stop lug 67 is disposed so that, in this operative position of the detent, it is located on the top face 68 of the supporting bracket 45. The edge 73 is parallel to the top of the arm 50. When the detents 61 and 85 are in this position and the spreader is fastened to the lifting arms and is lifted by the lifting arms above the ground, the weight of the spreader tends to turn the carrying arms 50 in the direction of the arrow 90. This turning is prevented by the edge 73 of the detents 61 and 85 serving as a stop. In the position of the detents shown in Figures 3 and 4, the two coupling pins 57 and 84 are at the same height as each other with respect to the frame 1. In this position of the coupling pins, the spreader coupled with the tractor will be horizontal, transverse of the direction 11, when the tractor is horizontal. Of course, even when the coupling pins are at the same height as each other, the top rod 36 of the spreader can be lengthened or shortened in the direction 11 so that the pivotal shafts 7 and 8 remain in planes which extend in the direction of movement and at right angles to the surface to be covered so as to tilt the distribution members downwardly or upwardly towards the rear.

For tilting the spreader towards, for example, the left-hand side, as viewed in the direction 11 (i.e. the right-hand side of the spreader as shown in Figures 2 and 3), the coupling pin 57 can be moved higher in the frame 1 than is indicated in Figures 2 and 3. For this purpose the spreader coupled with the lifting device is lowered to the ground. The weight of the spreader is then no longer carried by the arms 40 and 41. The carrying arms 50 of the fastening members 38 and 39 no longer tend to turn about their pivotal shafts 58 in the direction 90 under the action of the weight of the spreader. The carrying arms 50 thus exert no pressure on the edges 73 of the detents 61 and 85. The detent 61 can then be readily turned in a direction opposite the direction 89 about the shaft 62 against the action of the spring 71 by means of the coupling member 69 extending towards the tractor seat. When the detent 61 is held in this turned position and the spreader is raised by the lifting device, the pin 57 with the arm 50 can turn about the shaft 58 in the direction of the arrow 90. However, when the lifting arms 40 and 41 are moved upwards, the coupling pin 84 will remain relatively to the frame in the position shown in Figure 2 because turning of this coupling pin in the direction of the arrow 90 about the pivotal shaft is prevented by the detent 85. On the side of the fatening means 38, the spreader is then lifted by the lifting arm 40. The pin 57 can move upwardly with respect to the frame until the web 53 comes into contact with the limiting lug 82. The first part of the lifting movement of the arm 41 will be of no effect in lifting the spreader. When the limiting lug 82 is reached, the side of the spreader towards the fastening member 39 will move upwardly with the arm 41. The side towards the fastening member 38 is at that stage already lifted from the ground and the spreader is then laterally inclined. In this inclined position the spreader can be moved further upwardly so that also the side towards the fastening member 39 is lifted from the ground. The spreader can be moved upwardly until the distribution members 3 and 4 are at the height desired for spreading the material. The device can then be moved fowards and the material can be fed to the rotating distribution members for spreading it. The material is then spread obliquely down to the left-hand side over a shorter distance than in normal operation of the spreader. In this way a uniform distribution of the material is obtained over the whole width of the peripheral strip on the left-hand side of the spreader.

When this peripheral strip is covered, the spreader can be rapidly moved back into the normal working position. To do this, the spreader is lowered by lowering the arms 40 and 41, which are at the same height as each other above the ground. During this downward movement of the spreader the lifting arms 40 and 41 turn with respect to the frame 1 about the pins 84 and 57 respectively. Figure 1 shows the normal working position of the spreader. Figures 6 and 7 show the tilted position of the spreader; it is apparent

from Figure 6 that the pin 57 is located higher in the frame 1 than the pin 84. Figures 6 and 7 show that, in the tilted position, the control member 81 is spaced above the top of the arm 41. When the spreader is lowered with respect to the tractor by lowering the arms 40 and 41, the arm 41 moves in the direction of the arrow 92, turning about the pin 57. The control member is then positioned so that it comes into contact with the top of the arm 41 when the arm 41 has turned about the pin 57 into a given position. This position is shown in Figure 8. When the spreader is lowered further, the arm 41 tends to turn further about the pin 57. This turn is opposed by the control member 81 which is rigidly fastened to the frame 1. The weight of the spreaader exerts a downward force on the arm 50 and the pin 57 during further downwards movement of the arms 40 and 41 because the top of the arm 50 bears on the control member 81. Since the arm 50 merely abuts the underside of the limiting lug 82, the arm 50 with the pin 57 is urged in downward direction. Thus the arm 50 will turn opposite the arrow 90 with respect to the frame about the pivotal shaft 58. When the arms 40 and 41 are further lowered, the arm 50 will turn further about the pivotal shaft 58 until it reaches the position shown in Figures 2 and 3. Under the action of the spring 71, the point 93 of the strip 73 remains in contact with the top of the arm 50. The detent 61 constantly follows the top of the arm 50 until the position shown in Figure 3 is reached, in which the stop 67 bears on the top 68 of the supporting bracket 65. The detent 61 can then turn no further in the direction of the arrow 89. The carrying arm 50 has then reached a position in which the pin 57 is again located at the same height in the frame 1 as the pin 84. The spreader is then in a position in which the two supporting feet 26 and 27 are in contact or almost in contact with the horizontal ground. When the fastening means 39 has again reached the position shown in Figure 3, the laterally inclined position of the spreader is fully eliminated. The spreader is then again in its normal working position behind the trac tor. The spreader can then again be lifted into the desired position above the ground for normal operation. Turning of the carrying arm 50 about the shaft 58 in the direction of the arrow 90 is then again prevented by the detent 61 so that the spreader cannot tilt transversely of the direction 11. If the spreader is to be tilted again out of the normal working position, the spreader can again be lowered until the supports 26 and 27 rest on the ground so that the det ents 61 and 85 are relieved from the pressure on the edges 73 by the arms 50 when the weight of the spreader is carried by the fastening members 38 and 39. Then again one of the detents 61 or 85 can be turned upwards by pulling the cord 69 or 86 so that the spreader can be set askew to the position desired for spreading over a shorter distance to one side or the other of the spreader.

It will be appreciated that also the carrying arm 50 of the fastening member 38 can be turned into an upwards position with respect to the frame as is shown in Figure 6 for the fastening member 39, by removing the detent 85 as described above for the fastening means 39 and the detent 61. In the described construction, it is particularly advantageous that the spreader is automatically returned from its tilted setting when the lifting arms are lowered. In this embodiment the spreader has to be lowered until it is in contact or almost in contact with the ground. The position of the control members with respect to the fastening members may also be chosen so that the spreader can move at other heights above the ground between the normal position and the tilted setting of Figures 9 and 8 respectively. Hereby the position of one control member or the positions of both of the control members may be chosen in such a way that the fastening members 38 and 39 may be pushed downwards relative to the frame, because of the contact between the control members and the lifting arms 40 and 41 by lowering the device, so that the lower ends 73 come free from the upper side of the arms 50 and the detent 61 or 85 may be turned out of operative position without the need that the feet 26 and 27 contact the ground. Hereafter the spreader can be brought in an inclined position in the same way as explained herebefore by lifting the device. After the tilted setting is eliminated, the spreader can again be lifted to move it in the normal working position at the desired height. It is particularly important that, when the spreader is lowered from its tilted position, the detents regain the position shown in Figure 2 without the need to lower the spreader to the ground. This is particularly important when the spreader is used on uneven soil, such as ploughed fields, where the spreader can be lowered to the ground only with difficulty because the foot supports 26 and 27 cannot obtain satisfactory support on the worked soil before the arms 40 and 41 have reached their lower position. Moreover, it is not always possible to lower the arms 40 and 41 to an extent such that the spreader can be satisfactorily supported on uneven soil. As described above, the tilted setting of the spreader for spreading on a peripheral strip can be readily and automatically eliminated by lowering the spreader by downward movement of the arms 40 and 41. Thus the spreader can be readily reset in the normal working position without the need for the operator to get off the tractor.

In different kinds of tractors, the arms 40 and 41 may be at different heights above the ground, and so the control members 81 may be adjustable upwardly and downwardly to any one of at least two positions with respect to the frame posts 16 or 15. The control members 81 may be adjusted in accordance with the position of the lifting arms, with respect to the frame 1, in which the detents 61 and 85 must return to their operative positions for retaining the fastening members against upward movement about their pivotal shafts. The desired movement of the carrying arms 50 between two positions can thus be readily ensured. The highest position of the carrying arms with respect to the frame is then determined by the limiting lugs 82 and the lowest position by the detent 61 or 85 respectively. In the highest position of one of the carrying arms 50, the tilted setting to one or to the other side is obtained, whereas in the lowest position of both the carrying arms 50 the normal working position of the spreader is obtained.

The downward movement of the carrying arms 50 about their pivotal shafts in a direction opposite the arrow 90 is limited because the web 53 comes into contact with the side 94 of the post 16. The web 53 will, however, strike the side 94 only after the arms 40 and 41 have been lowered sufficiently or when the spreader is disengaged from the arms 40 and 41. This lowermost position of the carrying arms 50 does not determine a working position of the spreader. The device can be readily coupled with the arms 40 and 41 by moving the pins 57 and 84 to the same height of the arms 40 and 41 by turning about the pivotal shaft 58. This permissible turn between the contact of the arms 50 with the stop 73 and the contact of the web 53 with the side 94 provides a freedom of movement of the carrying arms 50 which is usually sufficient for readily coupling the arms 40 and 41 with the pins 57 and 84.

It will be noted from Figure 3 that, as viewed from the front, the width 95 of the plate 80, 81 is substantially the same as the length 96 of the coupling pin 57. Owing hereto it is ensured that the arms 40 and 41 will come into contact with the respective control arms 75 by lowering the arms 40 and 41.

Whilst various features of the spreader that have been described, and that are illustrated in the drawings, will be set forth in the following claims as inventive features, it is to be noted that the invention is not necessarily limited to these features and that it encompasses all of the features that have been described and illustrated both individually and in various combinations.

CLAIMS

.1. A spreader comprising a frame (1) and a distribution member (3,4) which is movable about an axis (7,8), the frame (1) being provided with fastening members (38,39) for coupling the spreader to a lifting device of a prime mover, characterized in that at least one of the fastening members (38,39) is adjustable with respect to the frame (1) for disposition in any one of at least two different positions in order to change the position of the spreader with respect to the prime mover, the frame (1) being provided with a control member (75,87) situated near the adjustable fastening member (38,39) in a manner such that, upon displacement of the spreader with respect to the prime mover from one vertical level to another, the control member (75,87) is operable to cause displacement of the adjustable fastening member (38,39) from one of its positions to a different position.

2. A spreader as claimed in claim 1, characterized in that the fastening member (38,39) is movable upwardly and downwardly with respect to the frame (1) and the control member (75,87) is disposed above the fastening member (38,39) so that, when the spreader is lowered with respect to the prime mover from a higher to a lower position, the control member (75,87) is operable to cause displacement of the fastening member (38,39) with respect to the frame.

3. A spreader as claimed in claim 1 or 2, characterized in that the control member (75,87) comprises a control stop (81) mounted on an arm extending forwardly from the frame (1), with respect to the normal intended direction (11) of operative travel of the spreader, the control stop (81), when the spreader is displaced upwardly or downwardly with respect to the prime mover, co-operating with a lifting arm (40,41) coupled with the adjustable fastening member (38, 39) to cause displacement of that fastening member (38, 39) from one position to the other.

4. A spreader as claimed in any one of the preceding claims, characterized in that the frame (1) is provided with a limiting lug (82, 88) which determines an uppermost position of the fastening member (38, 39) with respect to the frame (1).

5. A spreader as claimed in any one of the preceding claims, characterized in that the fastening member (38, 39) comprises a carrying arm (50) which is connected to the frame (1) for movement about a pivotal axis (58), the carrying arm being provided with a coupling pin (57, 84) which can be coupled with the lifting arm of the lifting device of a prime mover.

6. A spreader as claimed in claim 5, characterized in that the carrying arm (50) extends away from the pivotal axis (58) transverseley of the normal intended direction (11) of operative travel of the spreader in a laterally outwards direction, whereby a coupling pin (57, 84) is fastened to the outward extending side of the carrying arm (50) and extends in the lengthwise direction of the carrying arm (50).

7. A spreader as claimed in any one of the preceding claims, characterized in that a displaceable detent (61, 85) is provided on the frame (1) adjacent the fastening member (38, 39), the detent (61, 85) being adapted to co-operate with the fastening member (38, 39) to establish the normal operative position of the fastening member (38, 39) with respect to the frame (1).

8. A spreader as claimed in claim 7, characterized in that the detent (61, 85) is acted upon by a resilient member (71) which biases the detent (61, 85) towards a position in which it maintains the fastening member (38, 39) in its normal operative position, whereby the detent (61, 85) is connected to an actuating member (69, 86), which can be actuated from a prime mover to which the spreader is coupled, for displacing the detent (61, 85) from its operative position so that the fastening member (38, 39) is movable to a different vertical level with respect to the frame (1).

9.    A spreader as claimed in any one of the preceding claims, characterized in that a said adjustable fastening member (38, 39) is provided one on each side of the spreader, the fastening members (38, 39) each being movable with respect to the frame (1) into either one of at least two positions for changing the disposition of the spreader with respect to the prime mover, whereby the two adjustable fastening members (38, 39) are disposed substantially symmetrically with respect to a vertical central plane (9) of the spreader extending in the normal intended direction of operative travel of the spreader.

10.    A spreader as claimed in any one of the preceding claims, characterized in that the distribution member (3, 4) is rotatable about the axis (7, 8) which extends upwardly, the position of the rotary axis (7, 8) changing when the disposition of the fastening member (38, 39) is changed with respect to the frame (1).

11.    A spreader as claimed in any one of the preceding claims, characterized in that two of the said distribution members (3, 4) are provided, each of which is rotatable about a respective upwardly extending rotary axis (7, 8), the two distribution members (3, 4) rotating in operation in mutually opposite directions and spreading material over the same strip during travel of the spreader, whereby the two distribution members (3, 4) are at the same height as each other in the horizontal position of the spreader, the rotary axes (7, 8) being disposed in a common plane (10) which extends transversely of the normal intended direction (11) of operative travel of the spreader.

12. A method of operating a spreader hitched to a lifting device of a prime mover, characterized by the following steps:

a) lowering the spreader to relieve a fastening member (38, 39) of the spreader from engagement with a detent (61, 85);

b) displacing the detent (61, 85) from an operative position relative to the fastening member (38, 39); and

c) raising the spreader, enabling the fastening member (38, 39) to move to a different vertical level with respect to the frame of the spreader to a position determined by a limit stop (82) whereby the spreader assumes a transversely tilted position.

13. A method as claimed in claim 12, characterized in that the spreader is returned to its normal operative position from the tilted position by:

a) lowering the spreader by means of the lifting device to cause a control member (81) to engage the top of the lifting arm (41) coupled to the displaced fastening member (38, 39) and to urge the fastening member (38, 39) downwardly with respect to the frame until its normal working position is reached and the detent (61, 85) automatically resumed its operative position; and

b) lifting the spreader by means of the lifting device to return it to its normal operative position for spreading material to both sides over equal distance.

Fig.1

Fig.2

FIG.3

FIG.4

FIG.5

0163353

0163353

**Fig.6**

**Fig.7**

**Fig.8**

**Fig.9**